# EUROPEAN PATENT SPECIFICATION

(11) **EP 3 787 058 B1**
(45) Date of publication and mention of the grant of the patent: **30.10.2024**
(21) Application number: 20806012.9
(22) Date of filing: 17.04.2020
(51) Int. Cl.: H01M 50/15, H01M 50/176, H01M 50/184, H01M 50/186, H01M 50/188, H01M 50/474, H01M 50/477, H01M 50/147, H01M 50/583

(54) **TOP COVER ASSEMBLY, SECONDARY BATTERY, BATTERY PACK, AND ELECTRICAL DEVICE**
ABDECKUNGSANORDNUNG, SEKUNDÄRBATTERIE, BATTERIEPACK UND ELEKTRISCHES GERÄT
ENSEMBLE COUVERCLE SUPÉRIEUR, BATTERIE SECONDAIRE, BLOC-BATTERIE ET DISPOSITIF ÉLECTRIQUE

(30) Priority: 14.05.2019 CN 201920678452 U
(43) Date of publication of application: 03.03.2021
(73) Proprietor: Contemporary Amperex Technology (Hong Kong) Limited, Central, Central And Western District (HK)
(72) Inventor: HUANG, Shoujun, Ningde, Fujian 352100 (CN); CHEN, Baisong, Ningde, Fujian 352100 (CN); SU, Huasheng, Ningde, Fujian 352100 (CN); WANG, Peng, Ningde, Fujian 352100 (CN)
(74) Representative: Reddie & Grose LLP
(86) International application number: PCT/CN2020/085442
(87) International publication number: WO 2020/228486

(56) References cited:
- EP-A2- 1 300 893
- CN-U- 202 308 098
- CN-U- 205 645 909
- CN-U- 208 028 095
- CN-U- 208 690 318
- CN-U- 209 658 243
- CN-U- 209 658 246
- US-A1- 2015 180 007

## Description

### Technical Field

The present application relates to the technical field of secondary batteries, in particular to a top cover assembly, a secondary battery, a battery module and an electric equipment.

### Background Art

Patent application number EP 1 300 893 A2 discloses a closed type battery having no electrolyte leakage and improved airtightness, which comprises a battery header in which an electrode-drawing sheet of polarity opposite to that of a battery can is fixed by caulking to an insulating member fitted into a through-hole in a metal sheet while an electrode-leading pin remains inserted into the through-hole. An internal insulating sheet mounted on the surface of the metal sheet of the battery header located inside the battery can come into contact at two or more surfaces with an external insulating sheet mounted on a surface of the metal sheet of the battery header located outside the battery can.

Patent application number US 2015180007 A1 discloses an insulation insertion part and/or an insulating contact part is compressed with a compression force, a first insulating member, a second insulating member, a case lid, and/or an insert-through part create a receiving space which allows the insulation insertion part to deform in a shape that reduces a compression stress acting on the insulation insertion part when the insulation insertion part is compressed and receive a deformed portion thereof, and/or a receiving space which allows an insulating member having the insulating contact part to deform in a shape that reduces a compression stress acting on the insulating contact part when the insulating contact part is compressed and receives the deformed portion thereof.

Utility application CN 208028095 U relates to a battery that commprises an insulating substrate provided with a post hole. The circumference of the pole column perforation extends outwards to form a protrusion with an annular groove formed between projections.

Utility application CN 205645909 U describes a battery top cover assembly, comprising a top cover sheet, a pole, an elastic seal and an insulating pressing ring, the top cover sheet is provided with an electrode hole; the pole passes through the elastic seal, the electrode hole and the insulating pressing ring. The insulating pressing ring is attached to the side surface of the top cover sheet away from the battery core, and the elastic sealing member is located on the side of the insulating pressing ring facing the battery core. An insulating sleeve is also provided, the insulating sleeve is located between the pole and the electrode hole, and its two ends are respectively attached to the insulating pressing ring and the elastic sealing member.

Owing to such advantages as high energy density, high power density, multiple cycles and long storage time, secondary batteries such as lithium-ion batteries are widely used in electric vehicles. During the actual use of the secondary batteries, it is found that a cell has such safety risks as fire and explosion.

### Summary of the Invention

One technical problem to be solved in the present application is to reduce such risks as fire or explosion of secondary batteries when the secondary batteries are subjected to high voltage.

To solve the above technical problem, the present application provides a top cover assembly of a secondary battery, as defined in independent claim 1, as well as a secondary battery as defined in claim 9; a battery module as defined in claim 10 and an electric equipment as defined in claim 11. Preferred embodiments are defined in the dependent claims.

In some embodiments, a side surface of the first matching part, which is far away from a central axis of the electrode extraction hole, is configured to be a first inclined surface, and the first inclined surface is gradually close to the central axis of the electrode lead-out hole along a direction from bottom to top.

In some embodiments, at least part of an inner wall of the electrode lead-out hole is configured to be a second inclined surface, and the second inclined surface is gradually close to the central axis of the electrode lead-out hole along the direction from bottom to top.

In some embodiments, the first matching part is sealed with a side wall of the groove which is adjacent to a central axis of the electrode extraction hole.

In some embodiments, the sealing member includes a second sealing part, and the second sealing part extends downwards from the first sealing part and at least part of the second sealing part is located in the electrode extraction hole.

In some embodiments, the second insulating part includes a second matching part, the second matching part is connected to a side surface of the first matching part which is adjacent to a central axis of the electrode extraction hole, and the second matching part is sealed with a lower end of the second sealing part.

In some embodiments, a top end of the second matching part is sealed with the lower end of the second sealing part.

In some embodiments, the top end of the second matching part is lower than a top end of the first matching part.

By embedding and sealing the sealing member and the lower insulating member, the present application can effectively extend the creepage distance, thereby reducing such risks as fire or explosion when the secondary battery is subjected to high voltage.

Other characteristics and advantages of the present application will become clear through a detailed description of the exemplary embodiments of the present application with reference to the accompanying drawings below.

### Brief Description of the Drawings

In order to more clearly illustrate technical solutions in embodiments of the present application or in the prior art, a brief introduction will be given below on accompanying drawings which need to be used in the description of the embodiments or the prior art. Apparently, the accompanying drawings described below are merely some embodiments of the present application. Those skilled in the art can obtain other accompanying drawings according to these drawings without any creative effort.
Fig. 1 shows an exploded view of a secondary battery in an embodiment of the present application;
Fig. 2 shows a top view of Fig. 1;
Fig. 3 shows an A-A profile of Fig. 2;
Fig. 4 shows a partial enlarged schematic diagram of Fig. 3.

Reference numerals in the drawings:
1, secondary battery;
11, terminal assembly; 111, terminal plate;
12, sealing member; 121, first sealing part; 122, second sealing part; 121a, groove;
13, top cover plate; 131, electrode lead-out hole; 131a, second inclined surface;
14, lower insulating member; 141, first insulating part; 142, second insulating part; 142a, first matching part; 142b, second matching part; 14a, first inclined surface;
15, connecting plate; 151, tab connecting part; 152, terminal connecting part;
16, electrode assembly; 161, tab;
17, case.

### Detailed Description of the Embodiments

A clear and complete description will be given below on the technical solutions in the embodiments of the present application in combination with the accompanying drawings in the embodiments of the present application below, and apparently the embodiments described below are only a part but not all of the embodiments of the present application. The description of at least one exemplary embodiment below is merely illustration, rather than serving as any limitation to the present application and applications or uses thereof. Based upon the embodiments of the present application, all the other embodiments which can occur to those skilled in the art without any inventive effort shall fall into the protection scope of the present application.

The techniques, methods and devices known to those of ordinary skills in the art may not be discussed in detail, however, under appropriate conditions, the techniques, methods and devices should be deemed as a part of the authorized description.

In the description of the present application, it should be understood that, the orientation or positional relationship indicated by such nouns of locality as "front, rear, up, down, left, right", "transverse, longitudinal, vertical, horizontal" and "top, bottom" is generally based on the orientation or positional relationship shown in the drawings, and is merely for facilitating description of the present application and for simplifying the description. In the absence of an opposite statement, these nouns of locality do not indicate or imply that the device or element referred to must be located in a certain orientation or must be configured or operated in a certain orientation, therefore, these nouns of locality cannot be understood as a limitation to the protection scope of the present application; and such nouns of locality as "inside, outside" refer to the inside or outside of the outline of each part itself.

In the description of the present application, it should be understood that, the defining of components and parts by such terms as "first" and "second" is merely for the convenience of distinguishing corresponding components and parts, unless otherwise stated, the above terms have no special meanings, therefore, such terms cannot be understood as a limitation to the protection scope of the present application.

In addition, the technical features involved in different embodiments of the present application described below can be combined mutually as long as they do not conflict with each other.

At present, the voltage of a complete vehicle system is about 300V to 900V When a cell is abnormal, an internal circuit or a fuse (a fusing structure) will be disconnected, at this time, the cell will be subjected to a reverse high voltage of the system, however, the safety distance inside the existing secondary battery is not sufficient, therefore, the cell which is subjected to a reverse high voltage will have such safety risks as fire or explosion.

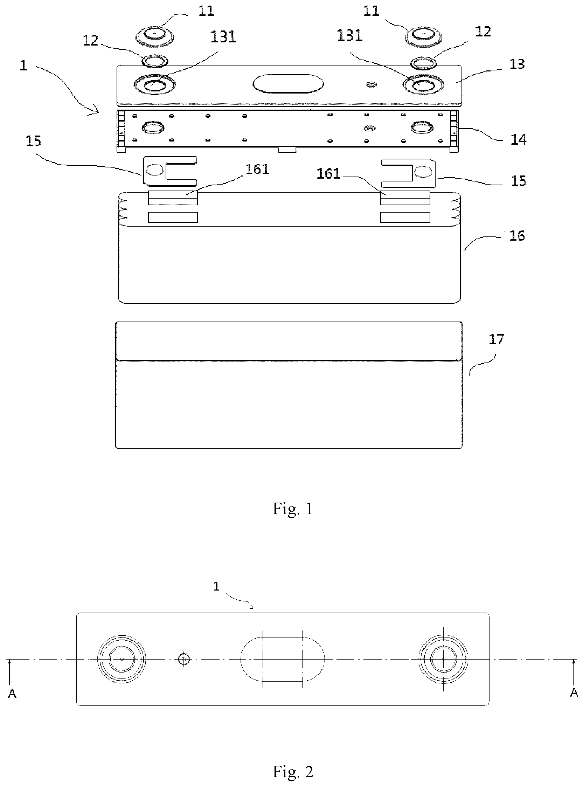

Figs. 1-4 show an embodiment of a secondary battery 1 and a top cover assembly thereof provided in the present application.

As shown in Figs. 1-3, the secondary battery 1 includes a top cover assembly, a connecting plate 15, an electrode assembly 16 and a case 17, etc.

The case 17, for accommodating the electrode assembly 16 and the like, is provided with a cavity inside and a top opening. The case 17 may be made of metal materials including aluminium, aluminum alloy or nickel-plated steel.

The electrode assembly 16, as a core part of the secondary battery 1, is accommodated in the cavity inside the case 17, and is formed by stacking or winding of a first electrode plate, a second electrode plate and an insulating spacer arranged between the first electrode plate and the second electrode plate. One of the first electrode plate and the second electrode plate is served as a positive electrode plate, while the other one is served as a negative electrode plate, and the first electrode plate and the second electrode plate both have a coating part coated with an active substance and tabs 161 which extend outwards from the coating part and are not coated with the active substance. The electric energy produced by the electrode assembly 16 is transmitted outwards through the tabs 161. The tab 161 corresponding to the positive electrode plate is called a positive tab (the tab 161 arranged on the right side in the figure), while the tab 161 corresponding to the negative electrode plate is called a negative tab (the tab 161 arranged on the left side in the figure).

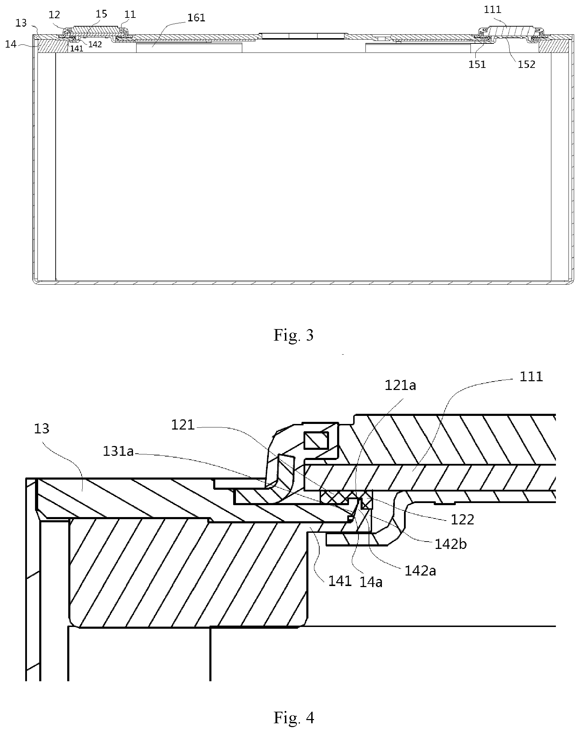

The top cover assembly covers on the top opening of the case 17, and is configured to provide a sealed space for the electrode assembly 16 and electrolyte in the cavity inside the case 17, and is configured to guide the electric energy produced by the electrode assembly 16 out of the case 17. As shown in Fig. 3 and Fig. 4, the top cover assembly includes a top cover plate 13, a terminal assembly 11, a sealing member 12 and a lower insulating member 14.

The top cover plate 13 covers on the top opening of the case 17, and provides an installation foundation for the terminal assembly 11, the sealing member 12 and the lower insulating member 14. As can be seen from Fig. 1, the top cover plate 13 of the present embodiment is in a shape of thin plate, and has a shape and size which are matched with those of the top opening of the case 17, thereby facilitating the top cover plate 13 to connect with the top opening of the case 17 to close the top opening of the case 17. Meanwhile, the top cover plate 13 is provided with an electrode lead-out hole 131, and the electrode lead-out hole 131 is a through hole, to facilitate electric connection between the terminal assembly 11 and the tab 161, and guide out the electric energy from inside to outside. Corresponding to the two tabs 161, the number of the electrode extraction holes 131 is also two, and the two electrode extraction holes 131 are respectively corresponding to the positive tab and the negative tab.

The terminal assembly 11, the sealing member 12 and the lower insulating member 14 are all arranged on the top cover plate 13, and corresponding to the two tabs 161, the number of the terminal assemblies 11, the sealing members 12 and the lower insulating members 14 is also two, wherein the terminal assembly 11, the sealing member 12 and the lower insulating member 14 corresponding to the positive tab form one group, while the terminal assembly 11, the sealing member 12 and the lower insulating member 14 corresponding to the negative tab form the other group, and the structures of the two groups are generally set to be the same, to simplify the structures. Therefore, one of the groups is mainly described below. If two groups need to be mentioned, then the groups are respectively named as "positive" and "negative", to facilitate distinguishing.

The terminal assembly 11 is arranged above the top cover plate 13 and is configured to be electrically connected with the tab 161. The terminal assembly 11 includes an electrode terminal and a terminal fixed member, the electrode terminal is electrically connected with the tab 161, and the electrode terminal is connected with the top cover plate 13 through the terminal fixed member.

The electrode terminal may be implemented as a pole extending into the case 17, or a terminal plate outside the case 17. As shown in Fig. 3 and Fig. 4, in the present embodiment, the electrode terminal is implemented as a terminal plate 111, and the terminal plate 111 is arranged above the top cover plate 13, covers the electrode lead-out hole 131, and is electrically connected with the tab 161. Compared with the pole which extends into the case 17 via the electrode lead-out hole 131, the terminal plate 111 being arranged outside the electrode lead-out hole 131 doesn't need to occupy internal space of the case 17, therefore, the energy density of the secondary battery 1 can be effectively improved. The terminal plate 111 may be of a circular or square slice or a thin plate structure. The terminal plate 111 corresponding to the positive tab is called a positive terminal plate, and the terminal plate 111 corresponding to the negative tab is called a negative terminal plate.

In the present embodiment, the terminal plate 111 is electrically connected with the tab 161 through a connecting plate 15. The connecting plate 15 is arranged between the electrode assembly 16 and the top cover assembly, and is configured to electrically connect the tab 161 with the terminal plate 111, so as to transmit the electric energy produced by the electrode assembly 16 to the terminal plate 111, thereby facilitating the terminal plate 111 to draw the electric energy out of the secondary battery 1. It can be seen from Fig. 1 that, in the present embodiment, the number of the connecting plates 15 is two, one of the connecting plates 15 electrically connects the positive tab with the positive terminal plate, and the other connecting plate 15 electrically connects the negative tab with the negative terminal plate.

To simplify the structure, in the present embodiment, the two connecting plates 15 adopt the same structure. As shown in Fig. 3 and Fig. 4, the connecting plate 15 of the present embodiment includes a tab connecting part 151 and a terminal connecting part 152, the tab connecting part 151 is electrically connected with the tab 161, and the terminal connecting part 152 is electrically connected with the terminal plate 111. The electrical connection herein may be realized for example through a welding manner.

Moreover, in combination with Fig. 3 and Fig. 4, it can be known that, in the present embodiment, the tab connecting part 151 is plate-shaped, and is roughly parallel to the top cover plate 13; and the terminal connecting part 152 is connected with the tab connecting part 151 and protrudes upwards relative to the tab connecting part 151, and the terminal connecting part 152 extends into the electrode lead-out hole 131 and is in contact with the terminal plate 111, thereby facilitating welding between the terminal connecting part 152 and the terminal plate 111 outside the electrode lead-out hole 131, and realizing electrical connection between the connecting part 152 and the terminal plate 111. The terminal connecting part 152 may be of a cylindrical convex hull structure, and may be formed by stamping the connecting plate 15.

The sealing member 12 is arranged between the top cover plate 13 and the terminal plate 111, and is configured to seal the electrolyte and the like, to prevent leakage of the electrolyte, thus improving operational reliability of the secondary battery 1. The lower insulating member 14 is configured to realize insulation between the top cover plate 13 and the electrode assembly 16 and the connecting plate 15, and the lower insulating member 14 is generally made of insulating materials including plastics.

In the process of practicing the present application, the inventor found that, when being matched, the sealing member 12 and the lower insulating member 14 generally do not contact or connect, or only contact but do not connect. Under such a condition, the creepage distance between the top cover plate 13 and the terminal plate 111 is short, meanwhile, the sealing effect of the sealing member 12 is poor, much electrolyte exists on the creepage distance, and the resistance is small, and these are important reasons that cause high-pressure discharge of the secondary battery 1 fire and even explosion under high voltage). The creepage distance refers to the shortest distance between two conducting parts along the surface of solid insulating materials. The longer the creepage distance is, the lower the risk of high-pressure discharge between conductors is.

In addition, the sealing member 12 arranged between the top cover plate 13 and the terminal plate 111 will be squeezed by the top cover plate 13 and the terminal plate 111, and thus be deformed (including deformation along a radial direction of the electrode lead-out hole 131), therefore, in the case that the sealing member 12 and the lower insulating member 14 only contact but do not connect, even if the two are expected to be sealed through contact, however, since the two are not connected with each other, after the sealing member 12 is deformed, the contact area between the sealing member 12 and the lower insulating member 14 will become small, even the two will be separated from each other and cannot contact, such that an expected sealing effect cannot be achieved, and even sealing failure may occur.

In view of the above situation, in the present application, the structure of the top cover assembly is improved, and the sealing member 12 of the top cover assembly is embedded with and sealed with the lower insulating member 14, thereby achieving at least one effect of extending the creepage distance and improving tightness, and further lowering the risk of high-pressure discharge of the secondary battery 1.

As shown in Figs. 1-4, the sealing member 12 of the top cover assembly in the present application includes a first sealing part 121, the first sealing part 121 is arranged on an upper surface of the top cover plate 13. The lower insulating member 14 is provided with a first insulating part 141 and a second insulating part 142 which are connected with each other, the first insulating part 141 is arranged below the top cover plate 13, the second insulating part 142 extends upwards from the first insulating part 141 and at least part of the second insulating part 142 is arranged in the electrode lead-out hole 131, one of the second insulating part 142 and the sealing member 12 is provided with a groove 121a, while the other includes a first matching part 142a, and the first matching part 142a is embedded into the groove 121a and is sealed with a bottom wall of the groove 121a.

By utilizing the match between the first matching part 142a and the groove 121a, the sealing member 12 and the lower insulating member 14 are embedded and sealed with each other, and in the present application, the creepage distance between the top cover plate 13 or the connecting plate 15 and the terminal plate 111 can be extended, thereby effectively lowering the risk of high-pressure discharge of the secondary battery 1.

Meanwhile, the sealing member 12 is in interface seal with the lower insulating member 14, thereby reducing electrolyte on the creepage distance, increasing the resistance, reducing current at a constant voltage, and further lowering the risk of high-pressure discharge.

Moreover, different from the structural form in which the sealing member 12 and the lower insulating member 14 are not connected with each other, in the present application, one of the sealing member 12 and the lower insulating member 14 is embedded into the other , such that the two are connected in an embedding manner (or called a clamping manner), since this can restrict the relative positional relationship of the two to a certain extent, the positional relationship and sealing interface of the two will not be influenced too much by the deformation of the sealing member 12, thus such problems as poor sealing or even failed sealing between the sealing member 12 and the lower insulating member 14 caused by the deformation of the sealing member 12 can be effectively prevented, thereby the sealing effect of the two being improved, and the risk of high-pressure discharge being lowered.

A further description will be given below on the top cover assembly of the present application with the structures shown in Fig. 3 and Fig. 4 as an example below.

As shown in Fig. 3 and Fig. 4, in the present embodiment, the sealing member 12 not only includes a first sealing part 121, but also includes a second sealing part 122 connected with the first sealing part 121. The first sealing part 121 is located between the upper surface of the top cover plate 13 and the lower surface of the terminal plate 111, in this way, the terminal plate 111 can tightly press the first sealing part 121 on the upper surface of the top cover plate 13, such that a sealing line is formed between the terminal plate 111 and the top cover plate 13; while the second sealing part 122 extends downwards from the first sealing part 121, and at least part of the second sealing part 122 is arranged in the electrode lead-out hole 131. The overall sealing member 12 may adopt an annular structure, at this time, the first sealing part 121 and the second sealing part 122 are both annular and are concentric with each other, moreover, the second sealing part 122 is arranged below the first sealing part 121 and has an outer diameter dimension which is smaller than that of the first sealing part 121.

As can be seen from Fig. 4 the groove 121a is arranged on the sealing member 12, and is specifically arranged on the lower surface of the first sealing part 121. Moreover, the groove 121a, in the present embodiment, is located at a position at which the first sealing part 121 is connected with the second sealing part 122, that is, the groove 121a is formed at a part, abutted against the second sealing part 122, of the lower surface of the first sealing part 121, such a setting has advantages of not only facilitating the sealing member 12 to be matched with the second insulating part 142 through the groove 121a, but also facilitating the sealing member 12 to be matched with the top cover plate 13 through the groove 121a.

As shown in Fig. 4 the first sealing part 121 is embedded with the top cover plate 13 through the groove 121a. Specifically, in the present embodiment, a bulge which protrudes upwards is arranged on an upper surface, in contact with the first sealing part 121, of the top cover plate 13, and the bulge is embedded into the groove 121a, such that the top cover plate 13 is clamped with the first sealing part 121. Based on this, the top cover plate 13 can be utilized to limit the first sealing part 121, such that the sealing member 12 is more stably arranged on the upper surface of the top cover plate 13, and is not easily displaced on the radial direction of the electrode lead-out hole 131. Moreover, based on this, the influence of the deformation of the sealing member 12 on the sealing effect can be effectively reduced by utilizing the match between the groove 121a and the first matching part 142a, which will be further illustrated below in combination with the description of the lower insulating member 14.

As shown in Fig. 1, Fig. 3 and Fig. 4, in the present embodiment, the whole lower insulating member 14 is roughly plate-shaped, and includes a first insulating part 141 and a second insulating part 142, wherein the first insulating part 141 is arranged below the top cover plate 13, to realize electric insulation between the top cover plate 13 and the electrode assembly 16 and the connecting plate 15; and the second insulating part 142 is connected with the first insulating part 141 and extends upwards from the first insulating part 141 into the electrode lead-out hole 131. The second insulating part 142 may be a hollow cylindrical protruding part arranged on the upper surface of the first insulating part 141.

Moreover, as shown in Fig. 3 and Fig. 4, in the present embodiment, the second insulating part 142 not only includes a first matching part 142a, but also includes a second matching part 142b, and the second matching part 142b is connected to a surface on a side of the first matching part 142a which is, adjacent to the central axis of the electrode lead-out hole 131 (that is, the surface on the right side in Fig. 4), wherein the first matching part 142a and the groove 121a are clamped and are in sealed match, while the second matching part 142b is in sealed match with a lower end of the second sealing part 122.

Specifically, it can be known from Fig. 4 that, in the present embodiment, the first matching part 142a is embedded into the groove 121a, such that the second insulating part 142 is clamped with the first sealing part 121 in an embedding manner, moreover, the first matching part 142a embedded into the groove 121a is not only in sealed match with the bottom wall of the groove 121a, but also in sealed match with a side wall on a side (that is, the right side wall in Fig. 4), adjacent to the central axis of the electrode lead-out hole 131, of the groove 121a.

The first matching part 142a is sealed with the groove 121a, such that the environmental medium between the top cover plate 13 and the terminal plate 111 and the connecting plate 15 is changed from air or electrolyte into the lower insulating member 14, therefore, the creepage distance is increased, and the electrolyte on the creepage distance is reduced, thus helping to lower the risk of safety accidents of the secondary battery 1 due to bearing reverse high voltage. Moreover, the first matching part 142a is simultaneously in sealed match with the bottom wall and the side wall of the groove 121a, such that more than one sealing interface is formed between the first matching part 142a and the first sealing part 121, the overall seal between the first matching part 142a and the first sealing part 121 will not fail due to the failure of one of the sealing interfaces, therefore, the sealing reliability is higher.

Meanwhile, the sealing member 12 is clamped with the lower insulating member 14 through the embedding between the first matching part 142a and the groove 121a, relative to the condition in which the sealing member 12 is not connected with the lower insulating member 14, the relative positions of the two are not restricted, and the sealing interface between the two is not easily damaged due to the extrusion deformation of the sealing member 12, therefore, the problem of failed sealing caused by the deformation of the sealing member 12 can be effectively prevented. The sealing interface between the first matching part 142a and the bottom wall of the groove 121a is especially not influenced by the extrusion deformation of the sealing member 12. When the sealing member 12 is deformed towards the electrode lead-out hole and down due to extrusion, a good contact sealing relationship between the first matching part 142a with the bottom wall of the groove 121a can be maintained, therefore, the sealing effect is good, and the sealing reliability is high. Moreover, as mentioned above, the groove 121a in the present embodiment is also embedded with the top cover plate 13 simultaneously, and under such a condition, the top cover plate 13 can further restrict the deformation of the sealing member 12 when the sealing member 12 is squeezed, and reduce changes in shape and position of the groove 121a in the deformation process of the sealing member 12, such that the embedding and sealed matching relationship between the groove 121a and the first matching part 142a is more stable, thereby being beneficial for realizing a more effective and reliable sealing effect.

In addition, as mentioned above, in the present embodiment, the lower insulating member 14 is not only in sealed match with the sealing member 12 through the first matching part 142a, but also in sealed match with the sealing member 12 through the second matching part 142b, based on this, the sealing interfaces between the lower insulating member 14 and the sealing member 12 are further increased, and the sealing area are enlarged, thereby being beneficial for further improving the sealing effect, and improving the operating safety of the secondary battery 1.

Specifically, as shown in Fig. 4, a top end of the second matching part 142b is sealed with the lower end of the second sealing member 122, forming another sealing interface, such that between the lower insulating member 14 and the sealing member 12, not only a sealing interface between the bottom wall and the side wall of the first matching part 142a and the groove 121a is included, but also a sealing interface between the second matching part 142b and the second sealing part 122 is simultaneously included, forming a multi-interface seal, therefore, the sealing reliability between the lower insulating member 14 and the sealing member 12 can be further improved.

The top end of the second matching part 142b may abut against the lower end of the second sealing part 122, and the two interfere with each other to form an interference fit, such that a tighter and more reliable sealed matching relationship can be realized between the second matching part 142b and the second sealing part 122 .

Moreover, as can be seen from Fig. 4, in the present embodiment, the top end of the second matching part 142b is lower than the top end of the first matching part 142a, such that a step part is formed between the top end of the first matching part 142a and the top end of the second matching part 142b, and the lower end of the second sealing part 122 extends downwards below the top end of the first matching part 142a and contacts a lower step surface of the step part for sealing, meanwhile, the first matching part 142a is not only sealed with a side wall on a side, adjacent to the central axis of the electrode lead-out hole 131, of the groove 121a, but also sealed with a surface on a side, far away from the central axis of the electrode lead-out hole 131, of the second sealing part 122, in this way, the sealing area between the first matching part 141a and the sealing member 12 in the vertical direction is increased, thereby being beneficial for further improving the sealing effect.

In addition, it can be known from Fig. 4 that, in the present embodiment, a surface on a side (the surface on the left side in Fig. 4), far away from the central axis of the electrode lead-out hole 131, of the first matching part 142a is configured to be a first inclined surface 14a, and the first inclined surface 14a is gradually close to the central axis of the electrode lead-out hole 131 along a direction from bottom to top. Based on this, relative to the condition in which the surface on the side, far away from the central axis of the electrode lead-out hole 131, of the first matching part 142a is set vertically or set to be inclined in a reverse direction, a size of the first matching part 142a along the radial direction of the electrode lead-out hole 131 (which can be called width for short) is reduced, since this is beneficial for reducing the internal space of the electrode lead-out hole 131 occupied by the second insulating part 142, more space is reserved for the terminal connecting part 152 on the upper part of the electrode lead-out hole 131, such that the terminal connecting part 152 may be set with a greater surface area to facilitate welding of the terminal connecting part 152 and the terminal plate 111 at a larger area, it's beneficial for increasing the welding area between the connecting plate 15 and the terminal plate 111, which can enhance a discharge capacity, and reduce heat.

To facilitate assembly of the second insulating part 142 and the sealing member 12, at least part of an inner wall of the electrode lead-out hole 131 may be configured to be a second inclined surface 131a, and the second inclined surface 131a is gradually close to the central axis of the electrode lead-out hole 131 along the direction from bottom to top. Specifically, as shown in Fig. 4, in the present embodiment, the part arranged at the lower part of the inner wall of the electrode lead-out hole 131 is configured to be the second inclined surface 13 1a. In this way, the second inclined surface 131a can play a role of guiding assembly, and guide the first matching part 142a to be embedded into the groove 121a, such that the assembly process of the second insulating part 142 and the sealing member 12 can be finished more accurately and more rapidly.

It can be known in combination with the above that, as to the top cover assembly in the embodiments shown in Figs. 1-4, the structure is simple, the assembly is convenient, meanwhile, the creepage distance is longer, and the electrolyte on the creepage distance is less, therefore, when the secondary battery 1 including such a top cover assembly is subjected to a reverse high voltage, such problems as fire and even explosion do not easily occur, and the use safety is higher. Moreover, the sealing effect of the top cover assembly is less influenced by the extrusion deformation of the sealing member 12 and the sealing reliability is higher.

However, to improve use safety and operating reliability of the secondary battery 1, the structure of the top cover assembly is not limited to what is shown in the above Fig. 4. Although not shown in figures, several feasible variant examples will be enumerated below. Moreover, to simplify description, the part which is the same as Fig. 4 will not be described repeatedly, and only differences of each embodiment are described as an emphasis.

As a variant of the top cover assembly shown in Fig. 4, the groove 121a arranged on the lower surface of the first sealing part 121 and matched with the first matching part 142a may be not simultaneously embedded with the top cover plate 13. In order to realize a more stable arrangement of the sealing member on the top cover plate 13, the top cover plate 13 and the first sealing part 121 may adopt other matching manners in addition to embedding, or the top cover plate 13 and the first sealing part 121 may still adopt an embedding manner, but the two are embedded through a slot other than the groove 121a, in other words, a slot may further be arranged on the lower surface of the first sealing part 121, and the first sealing part 121 is embedded with the top cover plate 13 through the slot. In this case, the lower surface of the first sealing part 121 is provided with more than one slot, and includes the groove 121a and the slot.

As another variant of the top cover assembly shown in Fig. 4, the groove 121a may be no longer arranged on the first sealing part 121, but arranged on the second sealing part 122 instead, for example, the groove 121a may be arranged at the lower end of the second sealing part 122, at this time, the second insulating part 142 may be inserted into the groove 121a, to realize the clamping and sealed match between the sealing member 12 and the second insulating part 142.

As still another variant of the top cover assembly shown in Fig. 4, the groove 121a may be no longer arranged on the sealing member 12, but arranged on the second insulating part 142 instead, at this time, the second sealing part 122 may be inserted into the groove 121a, to realize the clamping and sealed match between the sealing member 12 and the second insulating part 142.

As still another variant of the top cover assembly shown in Fig. 4, the sealing member 12 may only include the first sealing part 121, but not include the second sealing part 122, in this case, the clamping and sealed match between the sealing member 12 and the second insulating part 142 may also be realized through the match between the groove 121a on the first sealing part 121 and the first matching part 142a.

The present application further provides a battery module which includes the secondary battery 1 of the present application.

The present application further provides an electric equipment which includes the secondary battery 1 of the present application, and the secondary battery 1 is configured to provide electric energy.

The above are merely exemplary embodiments of the present application, and are not used for limiting the present application.

## Claims

1. A top cover assembly of a secondary battery (1), **characterized in that**, comprising:
a top cover plate (13), provided with an electrode lead-out hole (131);
a sealing member (12), comprising a first sealing part (121), wherein the first sealing part (121) is arranged on an upper surface of the top cover plate (13), and a groove (121a) is arranged on a lower surface of the first sealing part (121); and
a lower insulating member (14), provided with a first insulating part (141) and a second insulating part (142) which are connected with each other, wherein the first insulating part (141) is arranged below the top cover plate (13), the second insulating part (142) extends upwards from the first insulating part (141) and at least part of the second insulating part (142) is located in the electrode lead-out hole (131), the second insulating part (142) is provided with a first matching part (142a), and the first matching part (142a) is embedded into the groove (121a) and is sealed with a bottom wall of the groove (121a);
**characterized in that**, the first sealing part (121) is embedded with the top cover plate (13) through the groove (121a); or the lower surface of the first sealing part (121) is provided with a slot, and the first sealing part (121) is embedded with the top cover plate (13) through the slot.

2. The top cover assembly as claimed in any one of claims 1, **characterized in that**, a side surface of the first matching part (142a), which is far away from a central axis of the electrode lead-out hole (131), is configured to be a first inclined surface (14a), and the first inclined surface (14a) is gradually close to the central axis of the electrode lead-out hole (131) along a direction from bottom to top.

3. The top cover assembly as claimed in claim 2, **characterized in that**, at least part of an inner wall of the electrode lead-out hole (131) is configured to be a second inclined surface (131a), and the second inclined surface (131a) is gradually close to the central axis of the electrode lead-out hole (131) along the direction from bottom to top.

4. The top cover assembly as claimed in any one of claims 1-3, **characterized in that**, the first matching part (142a) is sealed with a side wall of the groove (121a) which is adjacent to a central axis of the electrode lead-out hole (131).

5. The top cover assembly as claimed in any one of claims 1-4, **characterized in that**, the sealing member (12) comprises a second sealing part (122), and the second sealing part (122) extends downwards from the first sealing part (121) and at least part of the second sealing part (122) is located in the electrode lead-out hole (131).

6. The top cover assembly as claimed in claim 5, **characterized in that**, the second insulating part (142) comprises a second matching part (142b), the second matching part (142b) is connected to a side surface of the first matching part (142a) which is adjacent to a central axis of the electrode lead-out hole (131), and the second matching part (142b) is sealed with a lower end of the second sealing part (122).

7. The top cover assembly as claimed in claim 6, **characterized in that**, a top end of the second matching part (142b) is sealed with the lower end of the second sealing part (122).

8. The top cover assembly as claimed in claim 7, **characterized in that**, the top end of the second matching part (142b) is lower than a top end of the first matching part (142a).

9. A secondary battery (1) comprising the top cover assembly as claimed in any one of claims 1-8.

10. A battery module comprising the secondary battery (1) of claim 9.

11. Electric equipment comprising the secondary battery (1) of claim 9, wherein the secondary battery (1) is configured to provide electric energy.

## Patentansprüche

1. Obere Abdeckungsanordnung einer Sekundärbatterie, die Folgendes aufweist:
eine obere Deckplatte (13), die mit einer Elektrodenanschlussbohrung (131) versehen ist;
ein Dichtungselement (12), das einen ersten Dichtungsteil (121) aufweist, wobei das erste Dichtungsteil (121) an einer Oberseite der oberen Deckplatte (12) angeordnet ist und an einer Unterseite des ersten Dichtungsteils (121) eine Nut (121a) angeordnet ist; und
ein unteres Isolierungselement (14), das mit einem ersten Isolierungsteil (141) und einem zweiten Isolierungsteil (142) versehen ist, die miteinander verbunden sind, wobei das erste Isolierungsteil (141) unter der oberen Deckplatte (13) angeordnet ist, das zweite Isolierungsteil (142) sich von dem ersten Isolierungsteil (141) nach oben erstreckt und mindestens Teil des zweiten Isolierungsteils (142) sich in der Elektrodenanschlussbohrung (131) befindet, das zweite Isolierungsteil (142) mit einem ersten zusammenpassenden Teil (142a) versehen ist und das erste zusammenpassende Teil (142a) in die Nut (121a) eingebettet ist und an einer Bodenwand der Nut (121a) dicht anliegt,
**dadurch gekennzeichnet, dass**
das erste Dichtungsteil (121) durch die Nut (121a) in der oberen Deckplatte (13) eingebettet ist; oder die Unterseite des ersten Dichtungsteils (121) mit einer Aussparung versehen ist und das erste Dichtungsteil (121) durch die Aussparung in der oberen Deckplatte (13) eingebettet ist.

2. Obere Abdeckungsanordnung nach Anspruch 1, **dadurch gekennzeichnet, dass** eine Seitenfläche des ersten zusammenpassenden Teils (142a), die weit von einer Mittelachse der Elektrodenanschlussbohrung (131) entfernt ist, als eine erste geneigte Oberfläche (14a) ausgeführt ist, und die erste geneigte Oberfläche (14a) sich der Mittelachse der Elektrodenanschlussbohrung (131) entlang einer Richtung von unten nach oben allmählich nähert.

3. Obere Abdeckungsanordnung nach Anspruch 2, **dadurch gekennzeichnet, dass** zumindest Teil einer Innenwand der Elektrodenanschlussbohrung (131) als eine zweite geneigte Oberfläche (131a) ausgeführt ist und die zweite geneigte Oberfläche (131a) sich der Mittelachse der Elektrodenanschlussbohrung (131) entlang der Richtung von unten nach oben allmählich nähert.

4. Obere Abdeckungsanordnung nach einem der Ansprüche 1 bis 3, **dadurch gekennzeichnet, dass** das erste zusammenpassende Teil (142a) dicht an einer Seitenwand der Nut (121a) anliegt, die an eine Mittelachse der Elektrodenanschlussbohrung (131) angrenzt.

5. Obere Abdeckungsanordnung nach einem der Ansprüche 1 bis 4, **dadurch gekennzeichnet, dass** das Dichtungselement (12) ein zweites Dichtungsteil (122) aufweist und das zweite Dichtungsteil (122) sich von dem ersten Dichtungsteil (121) nach unten erstreckt und zumindest Teil des zweiten Dichtungsteils (122) sich in der Elektrodenanschlussbohrung (131) befindet.

6. Obere Abdeckungsanordnung nach Anspruch 5, **dadurch gekennzeichnet, dass** das zweite Isolierungsteil (142) ein zweites zusammenpassendes Teil (142b) aufweist, wobei das zweite zusammenpassende Teil (142b) mit einer Seitenfläche des ersten zusammenpassenden Teils (142a) verbunden ist, die an eine Mittelachse der Elektrodenanschlussbohrung (131) angrenzt, und das zweite zusammenpassende Teil (142b) an einem unteren Ende des zweiten Dichtungsteils (122) dicht anliegt.

7. Obere Abdeckungsanordnung nach Anspruch 6, **dadurch gekennzeichnet, dass** ein oberes Ende des zweiten zusammenpassenden Teils (142b) an dem unteren Ende des zweiten Dichtungsteils (122) dicht anliegt.

8. Obere Abdeckungsanordnung nach Anspruch 7, **dadurch gekennzeichnet, dass** das obere Ende des zweiten zusammenpassenden Teils (142b) niedriger ist als ein oberes Ende des ersten zusammenpassenden Teils (142a).

9. Sekundärbatterie (1), die die obere Abdeckungsanordnung nach einem der Ansprüche 1 bis 8 aufweist.

10. Batteriemodul, das die Sekundärbatterie (1) nach Anspruch 9 aufweist.

11. Elektrische Einrichtung, die die Sekundärbatterie (1) nach Anspruch 9 aufweist, wobei die Sekundärbatterie (1) zum Bereitstellen elektrischer Energie ausgeführt ist.

## Revendications

1. Ensemble de couvercle supérieur d'une batterie secondaire (1), **caractérisé en ce qu'**il comprend :
une plaque de recouvrement supérieure (13), pourvue d'un trou de sortie d'électrode (131) ;
un élément d'étanchéité (12), comprenant une première partie d'étanchéité (121), dans lequel la première partie d'étanchéité (121) est agencée sur une surface supérieure de la plaque de recouvrement supérieure (13), et une rainure (121a) est agencée sur une surface inférieure de la première partie d'étanchéité (121) ; et
un élément isolant inférieur (14), pourvu d'une première partie isolante (141) et d'une seconde partie isolante (142) qui sont connectées l'une à l'autre, dans lequel la première partie isolante (141) est disposée en dessous de la plaque de recouvrement supérieure (13), la seconde partie isolante (142) s'étend vers le haut à partir de la première partie isolante (141) et au moins une partie de la seconde partie isolante (142) est située dans le trou de sortie d'électrode (131), la seconde partie isolante (142) est pourvue d'une première partie d'adaptation (142a), et la première partie d'adaptation (142a) est encastrée dans la rainure (121a) et est scellée avec une paroi inférieure de la rainure (121a) ;
**caractérisé en ce que**,
la première partie d'étanchéité (121) est encastrée avec la plaque de recouvrement supérieure (13) à travers la rainure (121 a) ; ou la surface inférieure de la première partie d'étanchéité (121) est pourvue d'une fente, et la première partie d'étanchéité (121) est encastrée avec la plaque de recouvrement supérieure (13) à travers la fente.

2. Ensemble de couvercle supérieur selon l'une quelconque des revendications 1, **caractérisé en ce qu'**une surface latérale de la première partie d'adaptation (142a), qui est éloignée d'un axe central du trou de sortie d'électrode (131), est configurée pour être une première surface inclinée (14a), et la première surface inclinée (14a) est progressivement proche de l'axe central du trou de sortie d'électrode (131) dans une direction de bas en haut.

3. Ensemble de couvercle supérieur selon la revendication 2, **caractérisé en ce qu'**au moins une partie d'une paroi intérieure du trou de sortie d'électrode (131) est configurée pour être une seconde surface inclinée (131a), et la seconde surface inclinée (131a) est progressivement proche de l'axe central du trou de sortie d'électrode (131) dans la direction de bas en haut.

4. Ensemble de couvercle supérieur selon l'une quelconque des revendications 1 à 3, **caractérisé en ce que** la première partie d'adaptation (142a) est scellée avec une paroi latérale de la rainure (121a) qui est adjacente à un axe central du trou de sortie d'électrode (131).

5. Ensemble de couvercle supérieur selon l'une quelconque des revendications 1 à 4, **caractérisé en ce que** l'élément d'étanchéité (12) comprend une seconde partie d'étanchéité (122), et la seconde partie d'étanchéité (122) s'étend vers le bas à partir de la première partie d'étanchéité (121) et au moins une partie de la seconde partie d'étanchéité (122) est située dans le trou de sortie d'électrode (131).

6. Ensemble de couvercle supérieur selon la revendication 5, **caractérisé en ce que** la seconde partie isolante (142) comprend une seconde partie d'adaptation (142b), la seconde partie d'adaptation (142b) est connectée à une surface latérale de la première partie d'adaptation (142a) qui est adjacente à un axe central du trou de sortie d'électrode (131), et la seconde partie d'adaptation (142b) est scellée avec une extrémité inférieure de la seconde partie d'étanchéité (122).

7. Ensemble de couvercle supérieur selon la revendication 6, **caractérisé en ce qu'**une extrémité supérieure de la seconde partie d'adaptation (142b) est scellée avec l'extrémité inférieure de la seconde partie d'étanchéité (122).

8. Ensemble de couvercle supérieur selon la revendication 7, **caractérisé en ce que** l'extrémité supérieure de la seconde partie d'adaptation (142b) est plus basse qu'une extrémité supérieure de la première partie d'adaptation (142a).

9. Batterie secondaire (1) comprenant l'ensemble de couvercle supérieur selon l'une quelconque des revendications 1 à 8.

10. Module de batterie comprenant la batterie secondaire (1) selon la revendication 9.

11. Equipement électrique comprenant la batterie secondaire (1) selon la revendication 9, dans lequel la batterie secondaire (1) est configurée pour fournir de l'énergie électrique.
